# EUROPEAN PATENT APPLICATION

(11) **EP 4 117 171 A1**
(43) Date of publication of application: **11.01.2023**
(21) Application number: 21382604.3
(22) Date of filing: 06.07.2021
(51) Int. Cl.: H02P 9/00, H02P 29/032, H02J 3/16

(54) **METHOD AND APPARATUS FOR COMPUTER-IMPLEMENTED CONTROLLING OF A DOUBLY-FED ELECTRIC MACHINE**

(71) Applicant: Siemens Gamesa Renewable Energy Innovation & Technology S.L., 31621 Sarriguren (Navarra) (ES)
(72) Inventor: Calvente Cordon, Pablo, 11360 San Roque (ES); Rodriguez Izal, José Luis, 31600 Burlada (ES); Celaya Lecea, Felipe Carlos, 31800 Alsasua (ES); Rebollo López, Emilio David, 28029 Madrid (ES)
(74) Representative: SGRE-Association

(57) **Abstract**

A method for computer-implemented controlling a doubly-fed electric machine, where stator windings of a stator are directly connected to an electrical grid and where rotor windings of a rotor are connected to the electrical grid via a power conversion system, comprising an AC-to-DC converter and a DC-to-AC converter and being adapted to control a rotor current, the method comprising obtaining a rotational speed of the machine; determining, whether the obtained rotational speed is within a predetermined operational speed range around the synchronous speed; and if it is determined that the obtained rotational speed is within the predetermined operational speed range, controlling the AC-to-DC converter of the power conversion system to force injection of a stator reactive power to create a harmonic at a frequency different than a rated frequency of the machine; and controlling the DC-to-AC converter of the power conversion system to compensate the created stator reactive power and the harmonic.

## Description

### FIELD OF INVENTION

The invention relates to a method and an apparatus for computer-implemented controlling of a doubly-fed electric machine, where stator windings of a stator are directly connected to an electrical grid and where rotor windings of a rotor are connected to the electrical grid via a power conversion system, comprising an AC-to-DC converter and a DC-to-AC converter and being adapted to control a rotor current.

### BACKGROUND

Generally, doubly-fed electric machines also called doubly-fed induction generator (DFIG) are electric motors or electric generators, where both the field windings and armature windings are separately connected to equipment outside the machine. By feeding adjustable frequency AC power to the field windings, the magnetic field can be made to rotate, allowing variation in motor or generator speed. This is useful, for instance, for generators used in wind turbines. DFIG-based wind turbines are advantageous in wind turbine technology because of their flexibility and ability to control active and reactive power.

The principle of the DFIG is that stator windings are connected to the grid and rotor windings are connected to the converter via slip rings and back-to-back voltage source converter that controls both rotor and the grid currents. By using the converter to control the rotor currents, it is possible to adjust the active and reactive power fed to the grid from the stator independently of the generator's rotational speed. As the rotor circuit is controlled by a power converter, the induction generator is able to both import and export reactive power. This allows the DFIG to support the grid during severe voltage disturbances. Further, the control of the rotor voltages and currents enables the induction machine to remain synchronized with the grid while the wind turbine speed varies.

When used with a wind power generation system, an operation at the maximum power point (MPP) is targeted. The MPP depends on the aerodynamic part of the turbine. Generally, rated power can be kept from a mechanical point of view when operating the wind power generation system at synchronous speed. However, when operating the DFIG around synchronous speed, there is a thermal limitation which requires operation of the wind power generation system with lower than rated power. At this condition, the rotor frequency is close to 0 Hz (DC) so that a load sharing between inverter switches of the power converter is drastically reduced because of high asymmetrical rotor currents. As a result, the rotor current asymmetry produces an overload of one of the branches of the power conversion system. This overload leads to an overheating of one of the inverter switching, damage and/or life span reduction when the current level and/or time limit is exceeded. On the other hand, rotor current asymmetry is required to create rotor magnetic poles on an airgap of the electrical machine.

Up to now, when a DFIG operates around its synchronous speed, two different control strategies may be applied. According to a first control strategy, an aerodynamic load is controlled such to avoid and/or limit the synchronous speed operation. According to a control second strategy, a drastic reduction of active/reactive power is applied to minimize the rotor current.

It is an object of the present invention to provide a method and an apparatus for computer-implemented controlling a doubly-fed electric machine which enlarge the limits of time and loads supported by a power conversion system when operating at synchronous speed.

### SUMMARY

This object is solved by a method according to the features of claim 1 and an apparatus according to the features of claim 8. Preferred embodiments are set out in the dependent claims.

The invention provides a method for computer-implemented controlling a doubly-fed electric machine, where stator windings of a stator are directly connected to an electrical grid and where rotor windings of a rotor are connected to the electric grid via a power conversion system. The power conversion system comprises an AC-to-DC converter and a DC-to-AC converter. The power conversion system is adapted to control a rotor current.

The method comprises the following steps during the operation of the doubly-fed electric machine, also referred to as a doubly-fed induction generator (DFIG).

In step a), a rotational speed of the machine is obtained. The term "obtaining a rotational speed" means that the rotational speed of the rotor of the electric machine is received by a processor implementing the method of the invention. The rotational speed refers to a digital representation of the rotational speed of the machine. The rotational speed may be determined by a respective sensor of the machine.

In step b), it is determined whether the obtained rotational speed is within a predetermined operational speed range around the synchronous speed. The synchronous speed is the rotational speed of the machine where the rated power can be kept from a mechanical point of view. It is a function of control parameters of the doubly-fed electric machine and external environmental parameters, such as wind speed, wind direction and so on in case the doubly-fed electric machine is used in a wind power generator system.

If it is determined that the obtained rotational speed is within the predetermined operational speed range, the following steps are performed.

In step c), the AC-to-DC converter of the power conversion system is controlled to force injection of a stator reactive power to create a harmonic at a frequency different than a rated frequency of the machine.

In step d), the DC-to-AC converter of the power conversion system is controlled to compensate the created stator reactive power and the thus created harmonic.

The present invention provides an easy and straightforward method for controlling a doubly-fed electric machine when operating around rotational speed. To do so, the power conversion system of the doubly-fed electric machine is controlled such that injection of stator reactive power at a frequency different than rated is forced. The stator reactive power must be enough to briefly change the current direction, thus reducing the duty cycle asymmetry. This portion of reactive power at a different frequency than rated is compensated by the grid-side converter (DC-to-AC converter) before entering the grid. Thus, no perturbance is seen by the external electrical grid.

The method as described above enables an aerodynamic performance optimization as consequence of relaxed electrical limitations at synchronous speed. Furthermore, a reduction of thermal damage of generator-side converter power electronic, i.e., the AC-to-DC converter is achieved. The efficiency of the doubly-fed electric machine is increased as to avoidance of speed exclusion zones around the synchronous speed. Furthermore, unexpected turbine stops can be avoided because of component overheating.

In an example, the predetermined operational speed range may be within ±1 % of slip, preferably ±0.5 % of slip, around the synchronous speed.

In an example, step c) may comprise controlling the AC-to-DC converter such that the forced injection of the stator reactive power is maximized at the synchronous speed and decreasing to the borders of the predetermined operational speed range. In particular, the decrease of the stator reactive power may be linear.

In an example, step c) may comprise controlling the AC-to-DC converter such that an AC voltage is imposed in the rotor windings of the doubly-fed electric machine. In particular, the AC voltage may be imposed with a frequency depending on the rotational speed and grid frequency.

In an example, step c) may comprise controlling the AC-to-DC converter such that the harmonic is absorbed by an impedance of the DC-to-AC converter.

In a further aspect, an apparatus for computer-implemented controlling a doubly-fed electric machine, where the apparatus is configured to perform the method according to the invention or one or more preferred embodiments of the method according to the invention, is provided.

In a further aspect, a computer program product with a program code which is stored on a non-transitory machine-readable carrier, for carrying out the method according to the invention or one or more preferred embodiments thereof when the program code is executed on a computer, is provided.

In a further aspect, a computer program with a program code for carrying out the method according to the invention or one or more preferred embodiments thereof when the program code is executed on a computer, is provided.

### BRIEF DESCRIPTION OF THE DRAWINGS

Embodiments of the invention will now be described in detail with respect to the accompanying drawings.
- Fig. 1: is a schematic illustration of a doubly-fed electric machine connected to an electrical grid, according to an example;
- Fig. 2: illustrates a schematic illustration of a power conversion system used to control the doubly-fed electric machine, according to an example;
- Fig. 3: shows the currents in the power conversion system in case the doubly-fed electric machine is operated around synchronous speed, according to an example; and
- Fig. 4: illustrates a chart used for controlling the power conversion system according to an example.

### DETAILED DESCRIPTION

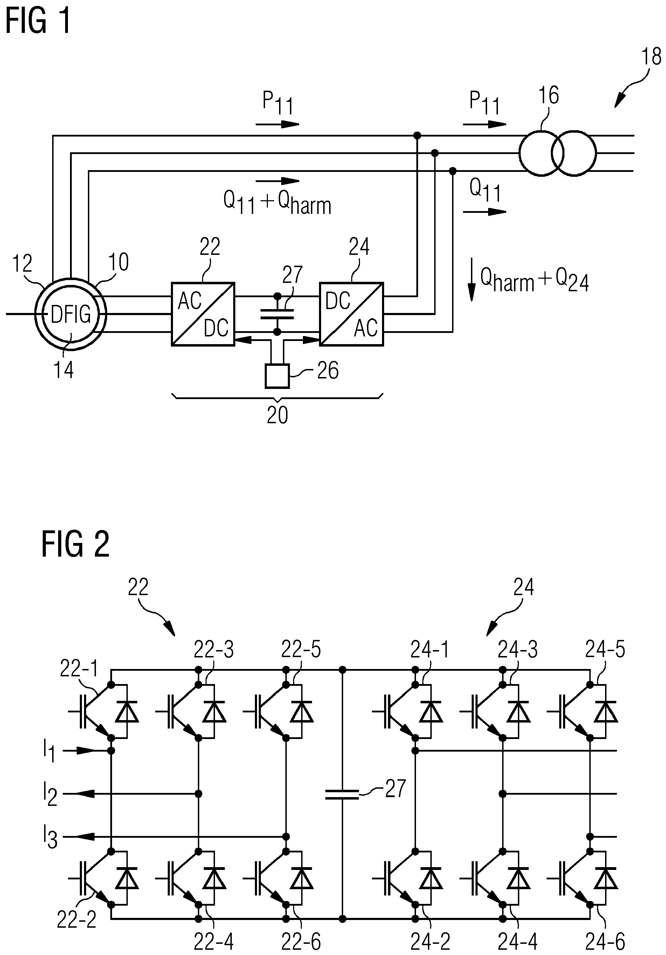

Fig. 1 shows a block diagram of a doubly-fed electric machine 10 which may be part of a not shown wind power generator system. Although the description below is in a context of a wind power generation system, the description is equally applicable to a variable speed drive system that uses the doubly-fed electric machine.

The machine 10 may comprise a stator 12 with stator windings (not shown) and a rotor 14 with rotor windings (not shown). The stator 12 of the electric machine may be connected to an electrical grid 18 via a transformer 16. The rotor 14 may be connected to the electrical grid 18 via a power conversion system 20. The power conversion system 20 may comprise an AC-to-DC converter 22 (also called generator-side converter) and a DC-to-AC converter 24 (also called grid-side converter). The power conversion system may be controlled via a processor 26 implementing or configured to implement a method according to any of the disclosed examples, from the rotor side of the electric machine by using the variable voltage and variable frequency machine-side converter 22. The generator-side converter 22 and the grid-side converter 24 are coupled via a capacitor 27 representing a DC bus.

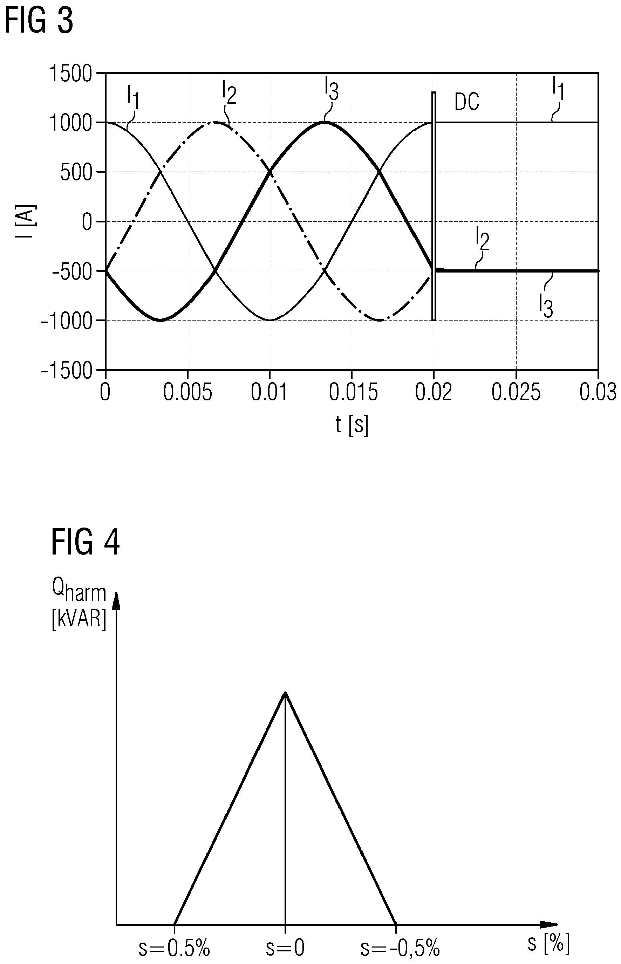

In the normal operation, the rotor 14 of the electric machine 10 may be rotating due to wind energy within a certain speed range. To achieve maximum power production (MPP) the generator-side converter 22 may be used to control the electric machine 10 and its active and reactive power production P₁₁ and Q₁₁. However, production of stator active power P₁₁ and stator reactive power Q₁₁ is thermally limited when operating around synchronous speed n_{sync}. At this condition, the rotor frequency is close to or substantially 0 Hz (DC), resulting in a reduced load sharing between inverter switches of each phase. This is illustrated by reference to Figs. 2 and 3.

Fig. 2 illustrates the inverter switches of the generator-side converter 22 and the grid-side converter 24 according to an example. As known for a skilled person, each phase may comprise two inverter switches connected in series to the capacitor 27. A node between the two inverter switches may be coupled to a respective phase. Hence, each of the generator-side converter 22 and the grid-side converter 24 may comprise six inverter switches "-1", "-2", "-3", "-4", "-5", and "-6", where the inverter switches with the suffixes "-1" and "-2" relate to a first phase, where the inverter switches with the suffixes "-3" and "-4" relate to the second phase and where the inverter switches with the suffixes "-5" and "-6" relate to the third phase.

If the rotor frequency is close to 0 Hz (DC), a rotor current (DC) asymmetry which is usually required to create rotor magnetic poles on an airgap between stator 12 and rotor 14, produce an overload of the branches of the generator-side converter 22. For example, around synchronous speed, current I₁ is flowing through inverter switch 22-1 of the first branch and inverter switches 22-3 and 22-5 of the second and third branch.

It can be seen from Fig. 3, in this situation the current I₁ equals the sum of currents I₂ and I₃, i.e. I₁ = -(I₂ + I₃) . This overload leads to overheating in the inverter switch 22-1 and may damage and/or reduce life span when a certain current level and/or time limit is exceeded. In this situation, the inverter switches of each of the group are always conducting, resulting in a lack of load sharing. Hence, high asymmetrical rotor current leads to overload of the inverter switch branches and causes overheating, reduction of life span of components.

To enable operation at synchronous speed, for example when avoidance is not possible and to avoid drastic reduction of load and operation time, the processor 26 may be configured to perform the following steps of the invention.

The rotational speed n of the electric machine 10 may be obtained during operation of the electric machine 10. It may be then determined by the processor 26, whether the obtained rotational speed n is within a predetermined operational speed range around the synchronous speed n_{sync}. This may be done by obtaining the slip s during operation of the electric machine 10. For example, if the predetermined operational speed range is within ±1 % of slip or preferably ±0.5 % of slip around the synchronous speed n_{sync}, the following steps may be performed by the processor 26.

The generator-side converter 22 may be controlled to force injection of a stator reactive power Qₕₐᵣₘ to create a harmonic at a frequency different than the rated frequency of the machine 10. At the same time, the grid-side converter 24 of the power conversion system 20 may be controlled such to compensate the created stator creative power Qₕₐᵣₘ and the harmonic.

By controlling the power conversion system 20 in such a way, the current direction can be changed briefly from a DC current to an AC current. This reduces the duty cycle asymmetry. As the generated portion of stator reactive power Qₕₐᵣₘ at different frequency than the rated frequency is compensated back by the grid-side converter 24 before entering the electrical grid 18, no perturbance is seen by the electrical grid 18.

To assure a good transmission of this control strategy at synchronous speed n_{sync}, a hysteresis loop as illustrated in the diagram of Fig. 4 may be used. The graph of the example of Fig. 4 is symmetrical with respect to the slip s shown on x-axis. If slip s = 0, the electrical machine 10 is operating at synchronous speed n_{sync}. If the slip s is within a predetermined operational range, for example within ±0.5 %, around the synchronous speed (s = 0), the amount of the created stator reactive power Qₕₐᵣₘ at a frequency different than the rated frequency for positive and negative slip values may be defined. The closer rotational speed is to the synchronous speed (s = 0), the bigger the forced injection of stator reactive power Qₕₐᵣₘ is. If the rotational speed corresponds to a slip s at the borders of the predetermined range (i.e., s = ±0.5 %), the injected stator reactive power Qₕₐᵣₘ at the different frequency than rated is decreased to 0.

The flow of the different powers can be seen from Fig. 1 where P₁₁ illustrates the stator reactive power, Q₁₁ stator reactive power, Qₕₐᵣₘ the stator reactive power at different frequency than rated and Q₂₄ the grid-side converter 24 reactive power.

## Claims

1. A method for computer-implemented controlling a doubly-fed electric machine (10), where stator windings of a stator (12) are directly connected to an electrical grid (18) and where rotor windings of a rotor (14) are connected to the electrical grid (18) via a power conversion system (20), comprising an AC-to-DC converter (22) and a DC-to-AC converter (24) and being adapted to control a rotor current, the method comprising the steps of:
a) obtaining a rotational speed (n) of the machine;
b) determining, whether the obtained rotational speed (n) is within a predetermined operational speed range around the synchronous speed (n_{sync}) ;
wherein, if it is determined that the obtained rotational speed (n) is within the predetermined operational speed range, the following steps are performed:
c) controlling the AC-to-DC converter (22) of the power conversion system (22) to force injection of a stator reactive power (Qₕₐᵣₘ) to create a harmonic at a frequency different than a rated frequency of the machine (10); and
d) controlling the DC-to-AC converter (24) of the power conversion system (20) to compensate the created stator reactive power (Qₕₐᵣₘ) and the harmonic.

2. The method according to claim 1, wherein the predetermined operational speed range is within ± 1% of slip (s), preferably ± 0.5% of slip (s), around the synchronous speed (n_{sync}).

3. The method according to claim 1 or 2, wherein step c) comprises controlling the AC-to-DC converter (22) such that the forced injection of the stator reactive power (Qₕₐᵣₘ) is maximized at the synchronous speed (n_{sync}) and decreasing to the borders of the predetermined operational speed range.

4. The method according to claim 3, wherein the decrease of the stator reactive power (Qₕₐᵣₘ) is linear.

5. The method according to any of the preceding claims, wherein step c) comprises controlling the AC-to-DC converter (22) such that an AC-voltage is imposed in the rotor windings of the doubly-fed electric machine (10).

6. The method according to claim 5, wherein the AC-voltage is imposed with a frequency depending on an angle of the electrical grid (18).

7. The method according to any of the preceding claims, wherein step c) comprises controlling the AC-to-DC converter (22) such that the harmonic is absorbed by an impedance of the DC-to-AC converter.

8. An apparatus for computer-implemented controlling a doubly-fed electric machine (10), where stator windings of a stator (12) are directly connected to an electrical grid (18) and where rotor windings of a rotor (14) are connected to the electrical grid (18) via a power conversion system (20), comprising an AC-to-DC converter (22) and a DC-to-AC converter (24) and being adapted to control a rotor current, wherein the apparatus comprises a processor (26) configured to perform the following steps:
a) obtaining a rotational speed (n) of the machine;
b) determining, whether the obtained rotational speed (n) is within a predetermined operational speed range around the synchronous speed (n_{sync}) ;
wherein, if it is determined that the obtained rotational speed (n) is within the predetermined operational speed range, the following steps are performed:
c) controlling the AC-to-DC converter (22) of the power conversion system (22) to force injection of a stator reactive power (Qₕₐᵣₘ) to create a harmonic at a frequency different than a rated frequency of the machine (10); and
d) controlling the DC-to-AC converter (24) of the power conversion system (20) to compensate the created stator reactive power (Qₕₐᵣₘ) and the harmonic.

9. The apparatus according to claim 8, wherein the apparatus is configured to perform a method according to any of claims 2 to 7.

10. A wind turbine, comprising an upper section on top of a tower, the upper section being pivotable around a vertical yaw axis and having a nacelle and a rotor with rotor blades, the rotor being attached to the nacelle and the rotor blades being rotatable by wind around a horizontal rotor axis, wherein the wind farm comprises an apparatus according to claim 8 or 9.

11. A computer program product with program code, which is stored on a non-transitory machine-readable carrier, for carrying out a method according to any of claims 1 to 7 when the program code is executed on a computer.

12. A computer program with program code for carrying out a method according to any of claims 1 to 7 when the program code is executed on a computer.
